Europäisches Patentamt

European Patent Office

Office européen des brevets

(11) Publication number: 0 293 067
A1

# EUROPEAN PATENT APPLICATION

(21) Application number: 88301611.5

(22) Date of filing: 25.02.88

(51) Int. Cl.⁴: F16L 21/06

(30) Priority: 27.05.87 GB 8712436

(43) Date of publication of application:
30.11.88 Bulletin 88/48

(84) Designated Contracting States:
BE DE ES FR IT NL SE

(71) Applicant: TRW United-Carr Ltd.
Buckingham Road
Aylesbury Buckinghamshire HP19 3QA(GB)

(72) Inventor: Ellis, David Charles
11, Desborough Green
Aylesbury Buckinghamshire, HP20 2DN(GB)
Inventor: Ferguson, Edward Harry Frederick
126, Broughton Avenue
Aylesbury Buckinghamshire, HP20 1QB(GB)

(74) Representative: Abbie, Andrew Kenneth et al
R.G.C. Jenkins & Co. 26 Caxton Street
London SW1H 0RJ(GB)

(54) Device for preventing separation of spigot and socket connections.

(57) A device 10 is provided for preventing separation of a spigot and socket connection in which the spigot 12 and the socket 14 are provided with respective circumferentially extending external flanges 16, 18. The device comprises a saddle member 20 fittable transversely onto the connection and provided with an inwardly opening channel 24 for receiving the flanges 16, 18. The channel has side faces 26, 28 for engagement with axially remote sides 30, 32 of the flanges for preventing or limiting axial movement apart thereof. A securing member 34 connectable across the opposed sides of the saddle member secures the saddle member on the connection.

FIG.6

# DEVICE FOR PREVENTING SEPARATION OF SPIGOT AND SOCKET CONNECTIONS

This invention relates to a device for preventing separation of spigot and socket connections and more particularly of spigot and socket connections which each are provided with respective circumferentially extending external flanges.

The device is especially, but not exclusively, applicable to spigot and socket connections in which respective circumferentially extending external flanges on the spigot and socket are arranged to cooperate with other means for preventing or limiting axial movement apart of the flanges, in which case the device is operative when the other means fails or is omitted in the making of the connection.

An example of such a connection is that used in a fuel injection line for a motor vehicle in which the external flange of the spigot defines a recess in which the external flange of the socket is accommodated, the recess opening axially outwardly relative to the spigot to allow the socket flange to be inserted thereinto when the connection is made and having a surface extending radially outwardly of the opening adjacent thereto, means being locatable in the recess between the recess surface and a facing surface of the socket flange for engagement with the recess and facing surfaces for preventing removal of the socket flange from the recess.

In such a connection, at least one of said recess and facing surfaces may be substantially frusto-conical and the means for preventing removal of the socket flange from the recess may comprise an annular spring locatable in the recess and radially outwardly expandable therein for allowing the socket flange to pass axially through the spring. It will be appreciated that in such an arrangement, if the spring is omitted (or fails by collapsing) the spigot and socket are free to separate axially.

One object of the present invention is to provide a device which will prevent separation of such a spigot and socket connection in these circumstances.

In accordance with the invention there is provided a device for preventing separation of a spigot and socket connection in which the spigot and socket are each provided with respective circumferentially extending external flanges, said device comprising: a saddle member fittable transversely onto the connection and comprising a first saddle portion provided with an inwardly opening channel means for receiving said flanges, the channel means having side faces arranged for engagement with axially remote sides of the flanges for preventing or limiting axial movement apart thereof, and a second saddle portion extending from the first saddle portion; and securing means connectable across the opposed sides of said second saddle portion for securing said saddle member on the connection.

In a preferred embodiment, which is described hereinafter, the securing means comprises a securing member hinged to one of said opposed sides of the second saddle portion, for example by means of a snap-fitted pivotal connection therewith, and snap-fittable to the other of said sides.

The securing member may comprise a portion resiliently engagable with the connection between the opposed sides of the second saddle portion of the saddle member. In the embodiment this portion comprises a pad connected to the remainder of the connecting member along an edge parallel to the sides of the second saddle portion of the saddle member.

The saddle member may have an attachment means connected thereto to enable the saddle member to be attached to one of the spigot and socket, or a pipe part connected thereto, prior to the spigot and socket connection being made. For example the attachment means may comprise a ring member connected to the saddle member by a flexible elongate member.

The invention also includes a spigot and socket connection in which the spigot and socket are each provided with respective circumferentially extending external flanges, and a device as defined above fitted onto the connection with the side faces of the channel means of the saddle member arranged for engagement with axially remote sides of the flanges for preventing or limiting axial movement apart thereof in order to prevent separation of the connection.

In order that the invention may be well understood, the presently preferred embodiment thereof, which is given by way of example only, will now be described with reference to the accompanying drawings, in which:

Figures 1 and 2 are respectively side and end view of a device for preventing separation of a spigot and socket connection in which the spigot and socket are each provided with respective circumferentially extending external flanges;

Figure 3 is a perspective view indicating assembly of the device shown in Figure 1 and a spigot and socket connection, and the fitting of the device to the spigot and socket connection;

Figures 4 and 5 are perspective views from different ends of the device showing the device fitted to the spigot and socket connection; and

Figure 6 is a side view to a larger scale than the other Figures and partly in axial cross-section of a fuel line including the spigot and socket connection and the device fitted thereto.

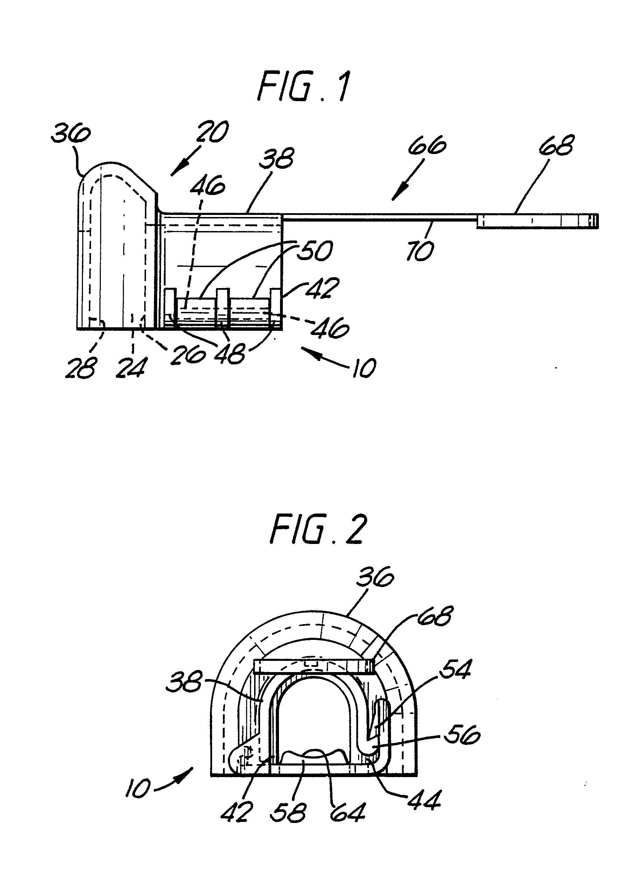

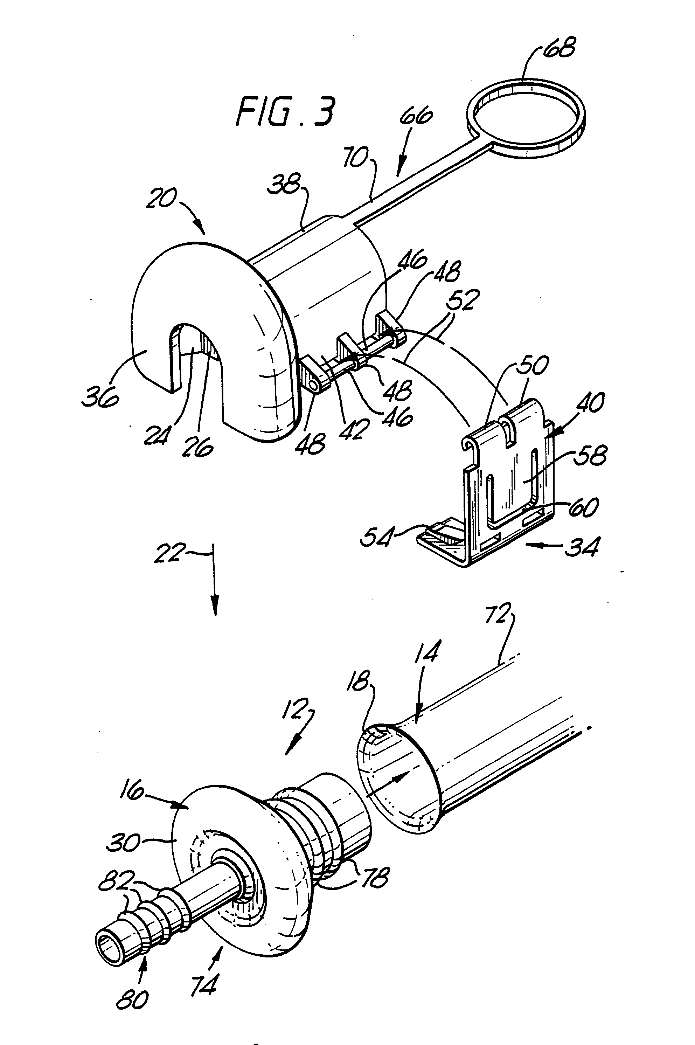

Referring to the drawings, there is shown a device 10, which is illustrated on its own in Figures 1 and 2, for preventing separation of a spigot and socket connection formed by inserting a spigot 12 into a socket 14 as indicated in the lower half of Figure 3. The spigot and socket are each provided with a respective circumferentially extending annular external flange 16, 18 and the device 10 comprises a saddle member 20 which is fittable transversely onto the connection as indicated by the arrow 22 in Figure 3. The saddle member is provided with an inwardly opening channel 24 which has opposed side faces 26, 28 arranged for engagement with axially remote sides 30, 32 of the flanges 16, 18 for limiting axial movement apart of the flanges to prevent separation of the spigot and socket connection. The device also includes a securing means, generally indicated at 34 for securing the saddle member on the connection, this securing means is connectable across opposed sides of the saddle member.

In more detail, the saddle member 20 comprises a first saddle portion 36 which is provided with channel 24 and a second saddle portion 38 extending from, and of smaller height and width than, the first saddle portion. Further, the securing means 34 comprises a securing member 40 which is connectable across the opposed sides 42, 44 of the second saddle portion 38. The securing member 40 is hinged to the side 42 and snap-fittable to the side 44. As illustrated the hinging of the member 40 to the side 42 is effected by means of a snap-fittable pivotal connection. More particularly, pivot pins 46 are mounted to the side 42 by means of bosses 48 and the securing member 40 is provided with hooks 50 which are snap-fittable over the pins 46 as indicated by the arrows 52 in Figure 3.

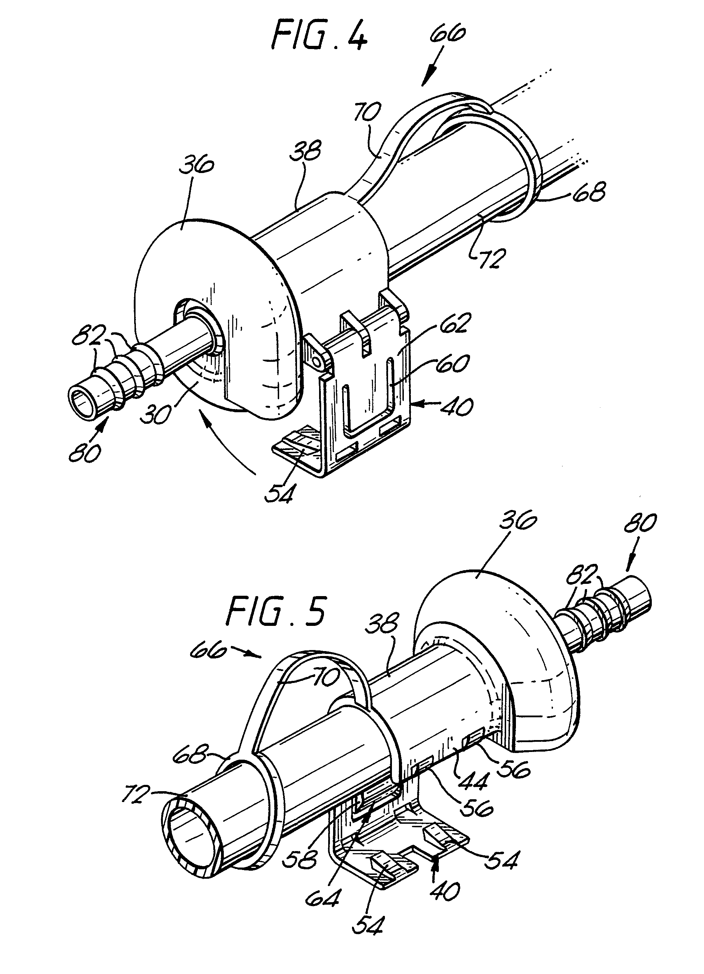

The snap-fitting of the securing member 40 to the side 44 of the saddle portion 38 is effected by means of interengaging snap-fastening means formed by lugs 54 and 56 provided on the securing member and side 44 respectively, as best indicated in Figures 2 and 5.

The securing member 40 is provided with a portion which is resiliently engagable with the connection between the opposed sides of the saddle portion 38 to ensure that the device is firmly located on the connection when the securing member is snap-fitted to the side 44 of the saddle portion 38. This resilient portion comprises a pad 58 connected to the remainder of the securing member along an edge parallel to the sides of the saddle portion 38. As illustrated the pad 58 is generally rectangular, being formed by providing a generally U-shaped slot 60 in a portion 62 of the securing member which extends between the sides 42, 44 of the saddle portion 38. The pad 58 is proud of the portion 62 on the side thereof which is adjacent the connection when the device is fitted and is provided with a concave engagement surface 64 for engaging the connection.

The device 10 is provided with an attachment means 66 for attaching the device to either the spigot or socket or a pipe connected to either of these parts of the connection prior to the spigot and socket connection being made. As illustrated this attachment means is connected to the saddle member, and comprises a ring member 68 connected to the saddle portion 38 by means of a flexible elongate member 70. The saddle member 20 and the securing member 40 may be made from a plastics material such as POM by injection moulding.

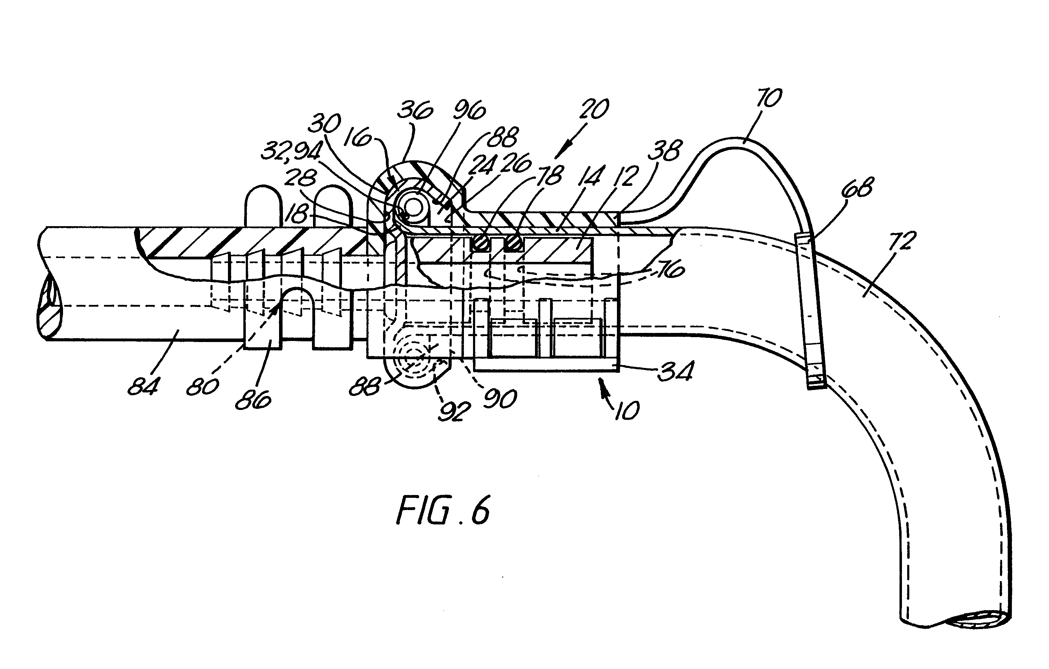

The illustrated spigot and socket connection with which the device 10 is specifically intended to be used is a connection in a fuel line of a fuel injection system for a motor vehicle. The socket 14 comprises an enlarged diameter end portion of a metal fuel injector pipe 72 and, as indicated in Figures 3 and 6, the free end of the socket portion is flared radially outwardly to provide the circumferentially extending annular external flange of the socket 14. The spigot 12 is part of a double spigot through-connector fitting 74 and is sized to fit within the socket 14. The spigot 12 is provided with two annular, radially outwardly opening grooves 76 (shown in Figure 6) in which respective O-rings 78 are accommodated for forming a seal against the interior of the socket 14. The other spigot of the fitting 74, is indicated at 80 and is provided with axially spaced apart, external circumferential serrations 82 for gripping the interior of a rubber or plastics tube 84 which is push-fitted onto the spigot 80. A hose band 86 is fitted to the exterior of the tube 84 to clamp the latter securely to the spigot 80. The circumferential annular flange 16 is disposed between the spigots 12 and 80 and defines a recess 88 in which the flange 18 of the socket is accommodated. The recess 88 opens axially outwardly relative to the spigot 12 to allow the socket flange to be inserted thereinto through the recess opening 90 when the connection between the socket 14 and spigot 12 is made. The recess 88 has an annular, substantially frusto-conical surface 92 extending radially outwardly of the opening 90 adjacent thereto and facing an annular surface 94 of the socket flange 18 when the latter is accommodated in the recess. This surface 94 is substantially frusto-conical with a curved generatrix. An annular spring 96 is located in the recess between the surfaces 92 and 94 and by engagement with these surfaces prevents removal of the socket flange from the recess. The spring 96 is expandable radially outwardly in the recess to allow the socket flange to pass axially through the spring. The flange 18 is configured so that when the spigot and socket connection is being made, the spring is automatically expanded radially outwardly on contact with the flange 18 to allow the flange 18 to pass through the spring into the position indicated in Figure 6. If it is required to disconnect the socket 14 from the spigot 12, a tool may be inserted through the opening 90 of the recess 88 to radially outwardly expand the spring 96 sufficiently to enable the flange 18 to pass axially through the spring out of the recess.

From the foregoing, it will be appreciated that the connection between the spigot 12 and socket 14 can be readily made and the device 10 which may conveniently be attached to the fuel pipe 72 prior to the connection being made may be readily applied to the connection by merely fitting the saddle member over the connection such that the flanges 16 and 18 are disposed within the channel 24 thereof and securing the saddle member in position by means of the securing member 40.

Further, it will be appreciated that whilst the spring 96 is intended to prevent separation of the socket 14 and spigot 12 in the illustrated connection, should this spring fail or be inadvertently omitted when the connection is made, the device 10 will prevent separation of the spigot 12 and socket 14 by virtue of the engagement of the axially remote side 30, 32 of the flanges with the side faces 28, 26 of the channel of the device 10. Thus, the device 10, which is clearly visible (whereas the spring 96 is not) enables a reliable connection to be made between the spigot 12 and socket 14.

It is to be understood that the device 10 may be used for preventing separation of a spigot and socket connection in which the spigot and socket are each provided with respective circumferentially extending external flanges and where there are no other means provided for preventing or limiting axial movement apart of the flanges. In this case, the sides of the channel of the saddle member may be disposed so as to prevent any axial movement apart of the flanges rather than limit such axial movement apart as in the illustrated arrangement.

## Claims

1. A device for preventing separation of a spigot and socket connection in which the spigot and socket are each provided with respective circumferentially extending external flanges, said device comprising: a saddle member fittable transversely onto the connection and comprising a first saddle portion provided with an inwardly opening channel means for receiving said flanges, the channel means having side faces arranged for engagement with axially remote sides of the flanges for preventing or limiting axial movement apart thereof, and a second saddle portion extending from the first saddle portion; and securing means connectable across the opposed sides of said second saddle portion for securing said saddle member on the connection.

2. A device as claimed in claim 1, wherein said securing means comprises a securing member hinged to one of said opposed sides and snap-fittable to the other of said sides.

3. A device as claimed in claim 2, wherein the securing member is hinged to said one of said opposed side by means of a snap-fitted pivotal connection therewith.

4. A device as claimed in claim 1, 2 or 3, wherein said securing member comprises a portion resiliently engagable with the connection between the opposed sides of the second saddle portion of the saddle member.

5. A device as claimed in claim 4, wherein said portion comprises a pad connected to the remainder of the securing member along an edge parallel to the side of the second saddle portion of the saddle member.

6. A device as claimed in any one of the preceding claims, wherein said saddle member has an attachment means connected thereto to enable the saddle member to be attached to one of the spigot and socket, or a pipe part connected thereto, prior to the spigot and socket connection being made.

7. A device as claimed in claim 6, wherein the attachment means comprises a ring member connected to the saddle member by a flexible elongate member.

8. A spigot and socket connection, in which the spigot and socket are each provided with respective circumferentially extending external flanges, and a device as claimed in any one of the preceding claims fitted onto the connection with said side faces of the channel means of the saddle member arranged for engagement with axially remote sides of the flanges for preventing or limiting axial movement apart thereof in order to prevent separation of the connection.

9. A connection as claimed in claim 8, wherein said flanges are arranged to cooperate with other means for preventing or limiting axial movement apart of said flanges, said device being operative when said other means fails or is omitted.

10. A connection as claimed in claim 9, wherein the external flange of the spigot defines a recess in which the external flange of the socket is accommodated, the recess opening axially outwardly relative to the spigot to allow the socket flange to be inserted thereinto when the connection is made and having a surface extending radially outwardly of the opening adjacent thereto, said other means being locatable in the recess between said recess surface and a facing surface of the socket flange for engagement with said recess and facing surfaces for preventing removal of the socket flange from the recess.

11. A connection as claimed in claim 10, wherein at least one of said recess and facing surfaces is substantially frusto-conical.

12. A connection as claimed in claim 10 or 11, wherein said other means comprises an annular spring locatable in the recess and radially outwardly expandable therein for allowing said socket flange to pass axially through said spring.

## FIG.1

## FIG.2

FIG. 3

0 293 067

FIG.4

FIG.5

FIG.6

0 293 067

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-U-1 879 021 (TELEFLEX) <br> * figure 2 * <br> --- | 1,2 | F 16 L 21/06 |
| A | BE-A- 572 679 (HERMANN WINGERATH) <br> * figure 1 * <br> --- | 1-4 | |
| A | GB-A-1 338 681 (CORNING GLASS WORKS) <br> * figure 7 * <br> ----- | 1-3 | |

|  | TECHNICAL FIELDS SEARCHED (Int. Cl.4) |
|---|---|
|  | F 16 L 21/00 <br> F 16 L 37/00 <br> F 16 L 29/00 <br> F 16 B 2/08 <br> F 16 B 7/00 <br> F 16 B 21/00 <br> F 02 M 55/02 |

The present search report has been drawn up for all claims

| Place of search | Date of completion of the search | Examiner |
|---|---|---|
| BERLIN | 05-05-1988 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)